# EUROPEAN PATENT SPECIFICATION

(11) **EP 3 549 962 B1**
(45) Date of publication and mention of the grant of the patent: **22.11.2023**
(21) Application number: 17876266.2
(22) Date of filing: 22.11.2017
(51) Int. Cl.: C08F 220/18, C08L 33/08, C08L 33/10, C08K 5/00

(54) **ACRYLIC COPOLYMER, AND CROSSLINKED PRODUCT THEREOF**
ACRYLCOPOLYMER UND VERNETZTES PRODUKT DARAUS
COPOLYMÈRE ACRYLIQUE, ET PRODUIT RÉTICULÉ DE CELUI-CI

(30) Priority: 30.11.2016 JP 2016233279
(43) Date of publication of application: 09.10.2019
(73) Proprietor: Osaka Soda Co., Ltd., Osaka-shi, Osaka 550-0011 (JP)
(72) Inventor: OKADA, Ryo, Osaka-shi, Osaka 550-0011 (JP); YANO, Tomoyuki, Osaka-shi, Osaka 550-0011 (JP); MATSUO, Takashi, Osaka-shi, Osaka 550-0011 (JP); ASAI, Hisashi, Osaka-shi, Osaka 550-0011 (JP)
(74) Representative: Müller-Boré & Partner Patentanwälte PartG mbB
(86) International application number: PCT/JP2017/042011
(87) International publication number: WO 2018/101146

(56) References cited:
- EP-A1- 2 246 373
- WO-A1-2016/136697
- JP-A- H0 491 108
- JP-A- 2001 181 464
- JP-A- 2006 225 443
- JP-A- 2007 100 040
- JP-A- 2007 100 041
- JP-A- 2007 100 041
- JP-A- 2007 138 015
- JP-A- 2007 138 015

## Description

### TECHNICAL FIELD

The present invention relates to an acrylic copolymer and a cross-linked product thereof. Hereinafter, a material made of the cross-linked product may be sometimes referred to as a "rubber material" or "cross-linked rubber material".

### BACKGROUND ART

In general, an acrylic polymer, which contains an acrylic acid ester as a main raw material, is known as a material excellent in various physical properties regarding durability and is widely used as industrial rubber materials or rubber materials for automobiles, such as engine gaskets, oil hoses, air hoses, O-rings, and the like.

However, these rubber members for automobiles, particularly, rubber members used in an engine compartment, are being asked to have further improved heat resistance due to the higher performance of turbo charger accompanying the higher output power of engines and recent tightening of exhaust gas regulations. Such members have been desired to have, for example, a small degradation in physical properties, particularly a low change rate of elongation at break even if exposed to high temperature conditions for a long period of time.

As a method for improving heat resistance against such a situation, Patent Document 1 discloses an acrylic rubber composition obtained by blending a condensed heterocyclic compound as an antiaging agent and a cross-linking agent in specific amounts into acrylic rubber.

However, rubber parts used in the automobile-related field etc. are being asked to have long-term heat resistance at higher temperatures, and a rubber material having heat resistance at higher temperatures has been desired.

Patent Document 2 discloses an acrylic rubber obtained by copolymerizing 100 parts by weight of an acrylic acid ester with 10 to 100 parts by weight of an alkyl methacrylate and 0.5 to 4 parts by weight of a cross-linkable monomer, and discloses that specific examples of combinations of the alkyl methacrylate and the cross-linkable monomer include a combination of methyl methacrylate and glycidyl methacrylate, a combination of n-butyl methacrylate and glycidyl methacrylate, and the like. Patent Document 2 describes that such an acrylic rubber has small change in elongation at break before and after heat aging, and that among the above specific combinations, the combination of methyl methacrylate and glycidyl methacrylate is most preferable in terms of heat-aging resistance. However, elongation at break after subjected to a thermal history is still greatly decreased, and hence a rubber material having more excellent heat resistance has been desired.

Patent Document 3 discloses a cross-linked product obtained by cross-linking an acrylic elastomer composition containing an acrylic elastomer obtained by copolymerization of an acrylate and a cross-linking site monomer, in which a molar fraction of an oxygen atom and a nitrogen atom in the acrylic elastomer is set to be a certain value or less, and a volume change when the cross-linked product is dipped in distilled water under certain conditions is prescribed. However, the heat resistance of the cross-linked product thus obtained has not been evaluated.
JP 2001-181464 A describes a composition for cure-molding for a heat-resistant air system hose.

### PRIOR ART DOCUMENT

### PATENT DOCUMENT

Patent Document 1: Japanese patent application No.2011-551930
Patent Document 2: WO 2009/099113
Patent Document 3: WO 2016/136697

### SUMMARY OF THE INVENTION

### PROBLEMS TO BE SOLVED BY THE INVENTION

An object of the present invention is to provide a cross-linked product of an acrylic copolymer for providing a rubber material that has a low change rate of elongation and a small change in hardness and is excellent in heat resistance even if exposed to high temperature conditions for a long period of time, an acrylic copolymer for the cross-linked product, and a composition containing the acrylic copolymer.

### SOLUTIONS TO THE PROBLEMS

As a result of intensive studies, the inventors have found that the above object can be accomplished by an acrylic copolymer including structural units comprising structural units derived from an acrylic acid ester having an alkyl group having 1 to 8 carbon atoms and/or structural units derived from an acrylic acid ester having an alkoxyalkyl group having 2 to 8 carbon atoms, structural units derived from an alkyl methacrylate having an alkyl group having 3 to 16 carbon atoms, and structural units derived from a cross-linkable monomer having a carboxyl group; a composition containing the acrylic copolymer and a cross-linking agent; and a cross-linked product obtained by cross-linking the composition. The invention has been made based on such a finding.

The present invention is defined in the appended claims.

### EFFECT OF THE INVENTION

The composition containing the acrylic copolymer of the present invention is excellent in processability. The cross-linked product produced using the composition containing the acrylic copolymer of the present invention (specifically, obtained by cross-linking the composition) is excellent in normal state physical properties and heat resistance at a high temperature for a long period of time, and has no deterioration in cold resistance and the like. Therefore, the cross-linked product is suitable as rubber materials for automobiles, such as fuel hoses, air hoses, and tube materials.

### MODE FOR CARRYING OUT THE INVENTION

First, the acrylic copolymer in the present invention will be described.

The acrylic copolymer of the present invention comprises 45 to 89.5% by weight of structural units (A) which are structural units derived from an acrylic acid ester having an alkyl group having 1 to 8 carbon atoms and/or structural units derived from an acrylic acid ester having an alkoxyalkyl group having 2 to 8 carbon atoms, 10 to 50% by weight of structural units (B) derived from an alkyl methacrylate having 3 to 16 carbon atoms, and 0.5 to 5% by weight of structural units (C) derived from a an ethylenically unsaturated dicarboxylic acid monoester. The above each content ratio of the structural units is preferably a ratio when the entire acrylic copolymer is 100% by weight. In the acrylic copolymer, the total content of the structural units (A), the structural units (B), and the structural units (C) is 100% by weight.

The acrylic acid ester having an alkyl group having 1 to 8 carbon atoms is preferably an alkyl acrylate having an alkyl group having 1 to 8 carbon atoms. The acrylic acid ester having an alkoxyalkyl group having 2 to 8 carbon atoms is preferably an acrylic acid alkoxyalkyl ester having an alkoxyalkyl group having 2 to 8 carbon atoms.

The structural units (A) which are structural units derived from an acrylic acid ester having an alkyl group having 1 to 8 carbon atoms and/or structural units derived from an acrylic acid ester having an alkoxyalkyl group having 2 to 8 carbon atoms are preferably structural units derived from an acrylic acid ester having an alkyl group having 1 to 8 carbon atoms. The structural units (A) may be structural units derived from single or two or more acrylic acid esters.

Specific examples of the structural units derived from an acrylic acid ester having an alkyl group having 1 to 8 carbon atoms include structural units derived from an acrylic acid ester such as methyl acrylate, ethyl acrylate, n-propyl acrylate, isopropyl acrylate, n-butyl acrylate, isobutyl acrylate, n-pentyl acrylate, n-hexyl acrylate, n-heptyl acrylate, n-octyl acrylate, 2-ethylhexyl acrylate, and cyclohexyl acrylate. Among these, structural units derived from ethyl acrylate or n-butyl acrylate are preferable.

Specific examples of the structural units derived from an acrylic acid ester having an alkoxyalkyl group having 2 to 8 carbon atoms include structural units derived from acrylic acid ester such as methoxymethyl acrylate, methoxyethyl acrylate, ethoxymethyl acrylate, 2-ethoxyethyl acrylate, 2-propoxyethyl acrylate, 2-butoxyethyl acrylate, 2-methoxypropyl acrylate, 2-ethoxypropyl acrylate, 3-methoxypropyl acrylate, 3-ethoxypropyl acrylate, 4-methoxybutyl acrylate, and 4-ethoxybutyl acrylate. Among these, structural units derived from methoxyethyl acrylate are preferable.

In the acrylic copolymer of the present invention, the content of the structural units (A) comprising structural units derived from an acrylic acid ester having an alkyl group having 1 to 8 carbon atoms and/or structural units derived from an acrylic acid ester having an alkoxyalkyl group having 2 to 8 carbon atoms is 45 to 89.5% by weight, preferably 50 to 89.5% by weight, more preferably 60 to 89.5% by weight in all the structural units of the acrylic copolymer. The content of the structural units (A) falling within the above-mentioned ranges is preferable in respect of cold resistance and oil resistance.

In the acrylic copolymer of the present invention, the structural units (A) comprising structural units derived from an acrylic acid ester having an alkyl group having 1 to 8 carbon atoms and/or structural units derived from an acrylic acid ester having an alkoxyalkyl group having 2 to 8 carbon atoms preferably include both structural units (A1) derived from an acrylic acid ester having an alkyl group having 1 to 3 carbon atoms and structural units (A2) derived from an acrylic acid ester having an alkyl group having 4 to 8 carbon atoms. The weight ratio of the structural units (A1) and the structural units (A2) is preferably 10 to 90:90 to 10 (that is, (A1):(A2) = 10:90 to 90:10), more preferably 20 to 80:80 to 20 (20:80 to 80:20), further preferably 30:70 to 70:30, most preferably 40:60 to 60:40.

The alkyl methacrylate having an alkyl group having 3 to 16 (preferably 4 to 16) carbon atoms means that an alkyl methacrylate of which the number of carbon atoms of an alkyl group is 3 to 16 (preferably 4 to 16). Examples of the structural units (B) derived from such an alkyl methacrylate include structural units derived from an alkyl methacrylate such as n-propyl methacrylate, isopropyl methacrylate, n-butyl methacrylate, isobutyl methacrylate, n-pentyl methacrylate, n-hexyl methacrylate, n-octyl methacrylate, 2-ethylhexyl methacrylate, n-decyl methacrylate, isodecyl methacrylate, n-dodecyl methacrylate, n-lauryl methacrylate, and n-octadecyl methacrylate. Among these, structural units derived from an alkyl methacrylate selected from n-butyl methacrylate, n-hexyl methacrylate, 2-ethylhexyl methacrylate, isodecyl methacrylate, and n-lauryl methacrylate are preferable. The structural units (B) are more preferably structural units derived from an alkyl methacrylate having an alkyl group having 4 or more and 9 or less carbon atoms (more preferably 8 or less, still more preferably 7 or less, particularly preferably 6 or less carbon atoms). For example, structural units derived from n-butyl methacrylate, n-hexyl methacrylate, and 2-ethylhexyl methacrylate are more preferable. These may be structural units derived from single or two or more alkyl methacrylates.

In the acrylic copolymer of the present invention, the content of the structural units (B) derived from an alkyl methacrylate having 3 to 16 carbon atoms is 10 to 50% by weight, preferably 10 to 40% by weight, more preferably 10 to 30% by weight in all the structural units of the acrylic copolymer. As examples of preferred embodiments, it is also preferable that the content be 10 to 48% by weight or 10 to 38% by weight. The content of the structural units (B) falling within the above-mentioned ranges is preferable in respect of heat resistance, cold resistance and oil resistance.

The structural units (C) are derived from an ethylenically unsaturated dicarboxylic acid monoester

Examples of the structural units derived from an ethylenically unsaturated dicarboxylic acid monoester are a fumaric acid monoalkyl ester such as monomethyl fumarate, monoethyl fumarate, monopropyl fumarate, monobutyl fumarate, monohexyl fumarate, and monooctyl fumarate, a maleic acid monoalkyl ester such as monomethyl maleate, monoethyl maleate, monopropyl maleate, monobutyl maleate, monopentyl maleate, and monodecyl maleate, an itaconic acid monoalkyl ester such as monomethyl itaconate, monoethyl itaconate, monopropyl itaconate, and monobutyl itaconate. The structural units derived from the fumaric acid monoalkyl ester are preferable, and the structural units derived from a fumaric acid monoalkyl ester having an alkyl group having 1 to 4 carbon atoms are most preferable.

In the acrylic copolymer of the present invention, the content of the structural units (C) derived from an ethylenically unsaturated dicarboxylic acid monoester is 0.5 to 5% by weight, preferably 0.5 to 2% by weight in all the structural units. The content of the structural units (C) derived from an ethylenically unsaturated dicarboxylic acid monoester falling within the above-mentioned ranges is preferable in respect of physical properties such as strength and compression set, and processability.

In the acrylic copolymer of the present invention, the contents of the structural units can be determined by nuclear magnetic resonance spectrum of an obtained polymer.

### <Method for Producing Acrylic Copolymer>

The acrylic copolymer used in the present invention can be obtained by polymerizing various monomers. Monomers to be used may be commercially available products and are not particularly restricted.

As for the manner of the polymerization reaction, any of emulsion polymerization, suspension polymerization, bulk polymerization, and solution polymerization can be used. In view of easiness to control the polymerization reaction and the like, emulsion polymerization at normal pressure is preferable, which is commonly used as a conventionally known method for producing an acrylic copolymer.

In the case of polymerization by emulsion polymerization, an ordinary method may be used, and a conventionally known polymerization initiator, emulsifier, chain transfer agent, polymerization terminator and the like can be used, which are generally used in emulsion polymerization.

The emulsifier used in the present invention is not particularly limited, and for example, nonionic and anionic emulsifiers commonly used for emulsion polymerization may be used. Examples of the nonionic emulsifier include a polyoxyethylene alkyl ether, a polyoxyethylene alcohol ether, a polyoxyethylene alkyl phenyl ether, a polyoxyethylene polycyclic phenyl ether, a polyoxyalkylene alkyl ether, a sorbitan fatty acid ester, a polyoxyethylene fatty acid ester, and a polyoxyethylene sorbitan fatty acid ester. Examples of the anionic emulsifier include an alkyl benzene sulfonate, an alkyl sulfate, a polyoxyethylene alkyl ether sulfate, a polyoxyalkylene alkyl ether phosphate or a salt thereof, and a fatty acid salt. These emulsifiers may be used alone or in combination of two or more. As the anionic emulsifier, sodium dodecyl sulfate, sodium dodecylbenzene sulfonate, and triethanolamine dodecyl sulfate can be used.

The amount of the emulsifier used in the present invention is required to be an amount commonly used in emulsion polymerization. Specifically, the amount of the emulsifier is in the range of 0.01 to 10% by weight, preferably 0.03 to 7% by weight, and more preferably 0.05 to 5% by weight, based on the amount of the monomers to be charged. When a reactive surfactant is used as a monomer component, the emulsifier need not necessarily be added.

The polymerization initiator used in the present invention is not particularly limited, and polymerization initiators commonly used for emulsion polymerization may be used. Specific examples of the polymerization initiator include an inorganic peroxide polymerization initiator represented by a persulfate such as potassium persulfate, sodium persulfate, and ammonium persulfate; an organic peroxide polymerization initiator (including a hydroperoxide polymerization initiator) such as 2,2-di(4,4-di-(t-butylperoxy)cyclohexyl)propane, 1-di-(t-hexylperoxy)cyclohexane, 1,1-di-(t-butylperoxy)cyclohexane, n-butyl 4,4-di-(t-butylperoxy)valerate, 2,2-di(t-butylperoxy)butane, t-butyl hydroperoxide, cumene hydroperoxide, diisopropylbenzene hydroperoxide, p-menthane hydroperoxide, 1,1,3,3-tetramethylbutyl hydroperoxide, t-butyl cumyl peroxide, di-t-butyl peroxide, di-t-hexyl peroxide, di(2-t-butylperoxyisopropyl)benzene, dicumyl peroxide, diisobutyrylperoxide, di(3,5,5-trimethylhexanoyl)peroxide, dilauroyl peroxide, disuccinic acid peroxide, dibenzoyl peroxide, di(3-methylbenzoyl)peroxide, benzoyl(3-methylbenzoyl)peroxide, diisopropyl peroxydicarbonate, di-n-propyl peroxydicarbonate, di(4-t-butylcyclohexyl)peroxydicarbonate, di(2-ethylhexyl)peroxydicarbonate, di-sec-butyl peroxydicarbonate, cumyl peroxyneodecanoate, 1,1,3,3-tetramethylbutyl peroxyneodecanoate, t-hexyl peroxyneodecanoate, t-butyl peroxyneodecanoate, t-hexyl peroxypivalate, t-butyl peroxypivalate, 2,5-dimethyl-2,5-di(2-ethylhexanoylperoxy)hexane, 1,1,3,3-tetramethylbutylperoxy-2-ethylhexanate, t-hexyl peroxy-2-ethyl hexanoate, t-butyl peroxy-2-ethyl hexanoate, t-butyl peroxy laurate, t-butyl peroxy-3,5,5-trimethyl hexanoate, t-hexyl peroxy isopropyl monocarbonate, t-butyl peroxy isopropyl monocarbonate, t-butyl peroxy-2-ethylhexyl monocarbonate, 2,5-dimethyl-2,5-di(benzoylperoxy)hexane, t-butyl peroxyacetate, t-hexyl peroxybenzoate, t-butyl peroxybenzoate, and 2,5-dimethyl-2,5-di(t-butylperoxy)hexane; an azo polymerization initiator such as azobisisobutyronitrile, 4-4'-azobis(4-cyanovaleric acid), 2-2'-azobis[2-(2-imidazolin-2-yl)propane, 2-2'-azobis(propane-2-carboxamidine), 2-2'-azobis[N-(2-carboxyethyl)-2-methylpropanamide], 2-2'-azobis{2-[1-(2-hydroxyethyl)-2-imidazolin-2-yl]propane}, 2-2'-azobis(1-imino-1-pyrrolidino-2-methylpropane) , and 2-2'-azobis{2-methyl-N-[1,1-bis(hydroxymethyl)-2-hydroxyethyl]propanamido}. These polymerization initiators may be used alone or in combination of two or more.

The amount of the polymerization initiator used in the present invention is required to be an amount commonly used in emulsion polymerization. Specifically, the amount of the polymerization initiator is in the range of 0.01 to 5% by weight, preferably 0.01 to 4% by weight, and more preferably 0.02 to 3% by weight, based on the amount of the monomers to be charged.

The organic peroxide and inorganic peroxide used as the polymerization initiator can be used as a redox polymerization initiator by combining with a reductant. The reductant used in combination is not particularly limited, and examples thereof include a compound containing a reduced metal ion such as ferrous sulfate and cuprous naphthenate; a methane compound such as sodium methanesulfonate; an amine compound such as dimethyl aniline; an ascorbic acid or a salt thereof and an inorganic salt having a reducing ability such as an alkali metal salt of sulfurous acid and an alkali metal salt of thiosulfuric acid. These reductants can be used alone or in combination of two or more. The amount of the reductant to be used is preferably 0.0003 to 10.0 parts by weight, based on 100 parts by weight of the monomers to be charged.

The chain transfer agent can be used as necessary. Specific examples of the chain transfer agent include an alkyl mercaptan such as n-hexyl mercaptan, n-octyl mercaptan, t-octyl mercaptan, n-dodecyl mercaptan, t-dodecyl mercaptan, and n-stearyl mercaptan; 2,4-diphenyl-4-methyl-1-pentene, 2,4-diphenyl-4-methyl-2-pentene; a xanthogen compound such as dimethylxanthogen disulfide and diisopropylxanthogen disulfide; terpinolene; a thiuram-based compound such as tetramethylthiuram disulfide, tetraethylthiuram disulfide, and tetramethylthiuram monosulfide; a phenol-based compound such as 2,6-di-t-butyl-4-methyl phenol and styrenated phenol; an allyl compound such as allyl alcohol; a halogenated hydrocarbon compound such as dichloromethane, dibromomethane, and carbon tetrabromide; a vinyl ether such as α-benzyloxystyrene, α-benzyloxyacrylonitrile, and α-benzyloxyacrylamide; triphenylethane, pentaphenylethane, acrolein, methacrolein, thioglycolic acid, thiomalic acid, and 2-ethylhexyl thioglycolate. These chain transfer agents may be used alone or in combination of two or more. The amount of the chain transfer agent to be used is not particularly limited and is generally 0 to 5 parts by weight, based on 100 parts by weight of the monomers to be charged.

Examples of the polymerization terminator include hydroxylamine, hydroxylamine sulfate, diethylhydroxyamine, hydroxyamine sulfonic acid or an alkali metal salt thereof, sodium dimethyldithiocarbamate, and a quinone compound such as hydroquinone. The amount of the polymerization terminator to be used is not particularly limited and is generally 0 to 2 parts by weight, based on 100 parts by weight of all the monomers.

The polymer obtained by the above method can have its pH adjusted using a base as a pH adjuster as necessary. Specific examples of the base include sodium hydroxide, potassium hydroxide, calcium hydroxide, ammonia, an inorganic ammonium compound, and an organic amine compound. The pH ranges from 1 to 11, preferably from 1.5 to 10.5, and more preferably from 2 to 10.

Besides the above materials, polymerization auxiliary materials such as a particle size modifier, a chelating agent, an oxygen scavenger, or the like can be used as necessary.

Emulsion polymerization may be of any of a batchwise process, a semi-batchwise process, and a continuous process. A polymerization time and a polymerization temperature are not particularly limited and can be suitably selected according to a type or the like of a polymerization initiator to be used. In general, the polymerization temperature is 10 to 100°C, and the polymerization time is 0.5 to 100 hours.

A method for collecting the polymer obtained by the above method is not particularly limited, and the polymer may be collected using conventional methods. One example of such methods is a method of supplying a polymerization solution continuously or batchwise to an aqueous solution containing a coagulant, and a coagulated slurry is obtained by this operation. Through this operation, the temperature of the aqueous solution containing the coagulant is influenced by the type and amount of monomer to be used or a shear force generated due to stirring or the like, and therefore cannot be uniformly determined. In general, it is 50°C or more, preferably in the range of 60°C to 100°C.

The coagulant to be used for this method is not particularly limited, and is preferably an inorganic metal salt. Specific examples of the inorganic metal salt include sodium sulfate, magnesium sulfate, aluminum sulfate, sodium chloride, and calcium chloride.

The coagulated slurry obtained by the above method is preferably washed with water in order to remove the coagulant. If washing with water is not performed at all or washing is insufficient, ion residues derived from the coagulant may be precipitated in a forming step.

Moisture is removed from the coagulated slurry after washing with water, and drying is performed, so that an acrylic copolymer can be obtained. The drying method is not particularly limited, and in general, a flash dryer, a fluidized bed dryer or the like is used. Before the drying step, a dehydrating step by a centrifugal separator or the like may be performed.

From the viewpoint of processability, the molecular weight range of the acrylic copolymer used in the present invention that is thus produced is preferably from 10 to 100, when represented as a Mooney viscosity (ML ₁₊₄) at 100°C in the Mooney scorch test specified in JIS K 6300, more preferably from 15 to 90, and even more preferably from 20 to 80.

### <Acrylic Copolymer-Containing Composition>

The acrylic copolymer-containing composition of the present invention contains at least the above-mentioned acrylic copolymer and a cross-linking agent.

As the cross-linking agent, conventionally known cross-linking agents such as a polyvalent amine compound, a polyvalent epoxy compound, a polyvalent isocyanate compound, an aziridine compound, a sulfur compound, a basic metal oxide, an organometallic halide, and the like, which are usually used for cross-linking rubber, may be used. Among these, the polyvalent amine compound are preferably used.

Examples of the polyvalent amine compound include an aliphatic polyvalent amine compound such as hexamethylenediamine, hexamethylenediamine carbamate, and N,N'-dicinnamylidene-1,6-hexanediamine; and an aromatic polyvalent amine compound such as 4,4'-methylenedianiline, m-phenylenediamine, 4,4'-diaminodiphenyl ether, 3,4'-diaminodiphenyl ether, 4,4'-(m-phenylene diisopropylidene)dianiline, 4,4'-(p-phenylene diisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetriaminomethyl, and isophthalic acid dihydrazide.

Examples of the polyvalent epoxy compound include a glycidyl ether-type epoxy compound such as a phenol novolak-type epoxy compound, a cresol novolak-type epoxy compound, a cresol-type epoxy compound, a bisphenol A-type epoxy compound, a bisphenol F-type epoxy compound, a brominated bisphenol A-type epoxy compound, a brominated bisphenol F-type epoxy compound, and a hydrogenated bisphenol A-type epoxy compound; and another polyvalent epoxy compound such as an alicyclic epoxy compound, a glycidyl ester-type epoxy compound, a glycidyl amine-type epoxy compound, and an isocyanurate-type epoxy compound.

Examples of the polyvalent isocyanate compound include 2,4-tolylene diisocyanate, 2,6-tolylene diisocyanate, 4,4'-diphenylmethane diisocyanate, hexamethylene diisocyanate, p-phenylene diisocyanate, m-phenylene diisocyanate, 1,5-naphthylene diisocyanate, 1,3,6-hexamethylene triisocyanate, 1,6,11-undecane triisocyanate, and bicycloheptane triisocyanate.

Examples of the aziridine compound include tris-2,4,6-(1-aziridinyl)-1,3,5-triazine, tris[1-(2-methyl)aziridinyl]phosphine oxide, and hexa[1-(2-methyl) aziridinyl]triphosphatriazine.

Examples of the sulfur compound include sulfur, 4,4'-dithiomorpholine, tetramethylthiuram disulfide, and tetraethylthiuram disulfide.

Examples of the basic metal oxide include zinc oxide, lead oxide, calcium oxide, and magnesium oxide.

Examples of the organometallic halide include a dicyclopentadienyl metal dihalide, and examples of the metal include titanium and zirconium.

These cross-linking agents may be used alone or in combination of two or more. The amount of each cross-linking agent to be used is 0.05 to 20 parts by weight, preferably 0.1 to 10 parts by weight, based on 100 parts by weight of the acrylic copolymer of the present invention.

The acrylic copolymer-containing composition of the present invention may contain other additives that are usable usually in the art, as desired. Examples of the additive include a lubricant, an antiaging agent, a photostabilizer, a filler, a reinforcing agent, a plasticizer, a processing aid, a pigment, a colorant, a cross-linking accelerator, a cross-linking aid, a cross-linking retardant, an antistatic agent, and a foaming agent.

In addition, the acrylic copolymer-containing composition of the present invention can be also blended with rubber, resin and the like as usually done in the art so long as it does not depart from the spirit of the invention. Examples of the rubber used in the present invention include butadiene rubber, styrenebutadiene rubber, isoprene rubber, natural rubber, acrylonitrile-butadiene rubber, acrylonitrile-butadiene-isoprene rubber, ethylene-propylene-diene rubber, and epichlorohydrin rubber. Examples of the resin include PMMA (polymethyl methacrylate) resin, PS (polystyrene) resin, PUR (polyurethane) resin, PVC (polyvinyl chloride) resin, EVA (ethylene/vinyl acetate) resin, AS (styrene/acrylonitrile) resin, and PE (polyethylene) resin.

The total compounding amount of the above-mentioned rubber and resin is 50 parts by weight or less, preferably 10 parts by weight or less, more preferably 1 part by weight or less, based on 100 parts by weight of the acrylic copolymer of the present invention.

As a compounding method of the acrylic copolymer-containing composition of the present invention, any means conventionally used in the field of polymer processing, for example, an open roll, a Banbury mixer, various kneaders and the like can be used.

The compounding can be carried out by conventional compounding procedures employed in the field of polymer processing. For example, only a polymer is first kneaded, then, compounding ingredients other than a cross-linking agent and a cross-linking accelerator are added to prepare an A-kneading compound, and thereafter, B-kneading to add the cross-linking agent and the cross-linking accelerator is performed.

A cross-linked product can be obtained by heating the composition of the present invention usually to a temperature of 100 to 250°C. The cross-linking time varies depending on the temperature and is usually in the range of 0.5 to 300 minutes. In cross-linking and molding of the composition, cross-linking and molding may be carried out in an integrated manner, a previously molded product of the acrylic copolymer-containing composition may be reheated to obtain a cross-linked product, or a cross-linked product obtained by previously heating the composition may be processed for molding. As a specific method for cross-linking and molding, any methods including compression molding or injection molding using a mold, and heating using a steam can, an air bath, infrared rays, or microwaves can be used.

The acrylic copolymer-containing composition of the present invention thus obtained is excellent in roll processability during processing. When the acrylic copolymer-containing composition of the present invention is formed into a sheet (uncross-linked sheet) having a thickness of about 2 to 2.5 mm, the Mooney scorch time (t₅) (JIS K 6300) at 125°C is, for example, 1 to 10 minutes, preferably about 2 to 8 minutes.

In the present invention, not only the acrylic copolymer-containing composition is excellent in roll processability, but also the obtained cross-linked product is excellent in normal state physical properties and heat resistance at high temperatures for a long period of time. Elongation at break EB (%) of the cross-linked product in a normal state can be determined in accordance with JIS K 6251, and is, for example, 100 to 400%, preferably 120 to 350%. Type A durometer hardness Hs (JIS A) of the cross-linked product in a normal state can be determined in accordance with JIS K 6253, and is, for example, 30 to 100, preferably 40 to 80.

Heat resistance after a heat-aging resistance test heating at 190°C for 336 hours can be evaluated by a change rate of elongation at break before and after the test (ΔEB (%) = {(EB (%) after heat-aging resistance test - EB (%) before heat-aging resistance test) / EB (%) before heat-aging resistance test} × 100 (%)) and a difference in hardness Hs before and after the test (ΔHs = Hs after heat-aging resistance test - Hs before heat-aging resistance test). The cross-linked product of the present invention has ΔEB (%), for example, of -48 or more, preferably -45 or more, more preferably -40 or more, still more preferably -30 or more, particularly preferably -20 or more, and most preferably -10 or more. The upper limit of ΔEB (%) is not particularly limited, and may be +30, +20, or +10, or may be about +5.

The ΔHs is, for example, within ± 20, preferably within ± 15, and more preferably within ± 10.

Utilizing the above-mentioned characteristics, the cross-linked product of the present invention is suitable for use for O-rings, packings, diaphragms, oil seals, shaft seals, bearing seals, mechanical seals, well head seals, seals for electrical and electronic equipment, seals for pneumatic equipment, and various types of gaskets such as cylinder head gaskets which are attached to connecting parts of cylinder blocks and cylinder heads, rocker cover gaskets which are attached to connecting parts of rocker covers and cylinder heads, oil pan gaskets which are attached to connecting parts of oil pans and cylinder blocks or transmission cases, gaskets for fuel cell separators which are attached between pairs of housings sandwiching unit cells provided with anodes, electrolyte plates, and cathodes, and gaskets for top covers of hard disk drives.

Furthermore, the cross-linked product of the present invention can be used as rubber materials and is suitable for use for various hoses such as fuel oil hoses around fuel tanks such as fuel hoses, filler neck hoses, vent hoses, vapor hoses, and oil hoses, air hoses such as turbo air hoses and emission control hoses, radiator hoses, heater hoses, brake hoses, and air conditioner hoses, as extruded products and molded-cross-linked products used in automotive applications.

### EXAMPLES

Hereinafter, the present invention will be specifically described with reference to Examples and Comparative Examples. However, the present invention is not limited to these Examples.

In the Examples and the Comparative Examples, acrylic copolymers were produced, and then the physical properties of an acrylic copolymer-containing composition containing the obtained acrylic copolymer and a cross-linking agent and the physical properties of a cross-linked product obtained by cross-linking the acrylic copolymer-containing composition were evaluated.

### [Example 1]

### (Production of Acrylic Copolymer A)

A polymerization reactor equipped with a thermometer, a stirring apparatus, a nitrogen introduction tube and a pressure reducing apparatus was charged with 200 parts by weight of water, 1.7 parts by weight of polyoxyalkylene alkyl ether phosphate, and, as monomers, 41.4 parts by weight of ethyl acrylate, 45.4 parts by weight of n-butyl acrylate, 11.8 parts by weight of n-butyl methacrylate, and 1.4 parts by weight of monoethyl fumarate. Oxygen was thoroughly removed by repetitive deaeration under reduced pressure and nitrogen replacement. Then, 0.1 parts by weight of sodium ascorbate and 0.1 parts by weight of potassium persulfate were added to the reactor. Emulsion polymerization reaction was started at room temperature under normal pressure. The reaction was continued until the rate of conversion in polymerization reached 95%. The polymerization was terminated by the addition of 0.0075 parts by weight of hydroquinone. Then, the obtained emulsion polymer solution was coagulated with an aqueous sodium sulfate solution, washed with water, and dried to obtain acrylic copolymer A.

### [Example 2]

### (Production of Acrylic Copolymer B)

Acrylic copolymer B was obtained in the same manner as in Example 1 except for changing the monomers to be charged and the amounts thereof to 47.4 parts by weight of ethyl acrylate, 39.4 parts by weight of n-butyl acrylate, 11.8 parts by weight of n-hexyl methacrylate, and 1.4 parts by weight of monoethyl fumarate.

### [Example 3]

### (Production of Acrylic Copolymer C)

Acrylic copolymer C was obtained in the same manner as in Example 1 except for changing the monomers to be charged and the amounts thereof to 49.4 parts by weight of ethyl acrylate, 37.4 parts by weight of n-butyl acrylate, 11.8 parts by weight of 2-ethylhexyl methacrylate, and 1.4 parts by weight of monoethyl fumarate.

### [Example 4]

### (Production of Acrylic Copolymer D)

Acrylic copolymer D was obtained in the same manner as in Example 1 except for changing the monomers to be charged and the amounts thereof to 59.4 parts by weight of ethyl acrylate, 27.4 parts by weight of n-butyl acrylate, 11.8 parts by weight of isodecyl methacrylate, and 1.4 parts by weight of monoethyl fumarate.

### [Example 5]

### (Production of Acrylic Copolymer E)

Acrylic copolymer E was obtained in the same manner as in Example 1 except for changing the monomers to be charged and the amounts thereof to 69.4 parts by weight of ethyl acrylate, 17.4 parts by weight of n-butyl acrylate, 11.8 parts by weight of lauryl methacrylate, and 1.4 parts by weight of monoethyl fumarate.

### [Example 6]

### (Production of Acrylic Copolymer G)

Acrylic copolymer G was obtained in the same manner as in Example 1 except for changing the monomers to be charged and the amounts thereof to 35.0 parts by weight of ethyl acrylate, 52.0 parts by weight of n-butyl acrylate, 11.8 parts by weight of isopropyl methacrylate, and 1.4 parts by weight of monoethyl fumarate.

### [Example 7]

### (Production of Acrylic Copolymer H)

Acrylic copolymer H was obtained in the same manner as in Example 1 except for changing the monomers to be charged and the amounts thereof to 41.4 parts by weight of ethyl acrylate, 37.4 parts by weight of n-butyl acrylate, 19.8 parts by weight of n-butyl methacrylate, and 1.4 parts by weight of monoethyl fumarate.

### [Example 8]

### (Production of Acrylic Copolymer I)

Acrylic copolymer I was obtained in the same manner as in Example 1 except for changing the monomers to be charged and the amounts thereof to 43.4 parts by weight of ethyl acrylate, 43.4 parts by weight of n-butyl acrylate, 11.8 parts by weight of isobutyl methacrylate, and 1.4 parts by weight of monoethyl fumarate.

### [Comparative Example 1]

### (Production of Acrylic Copolymer F)

Acrylic copolymer F was obtained in the same manner as in Example 1 except for changing the monomers to be charged and the amounts thereof to 49.3 parts by weight of ethyl acrylate, 49.3 parts by weight of n-butyl acrylate, and 1.4 parts by weight of monoethyl fumarate.

### [Comparative Example 2]

### (Production of Acrylic Copolymer J)

Acrylic copolymer J was obtained in the same manner as in Example 1 except for changing the monomers to be charged and the amounts thereof to 19.4 parts by weight of ethyl acrylate, 59.4 parts by weight of n-butyl acrylate, 19.8 parts by weight of methyl methacrylate, and 1.4 parts by weight of glycidyl methacrylate.

### [Comparative Example 3]

### (Production of Acrylic Copolymer K)

Acrylic copolymer K was obtained in the same manner as in Example 1 except for changing the monomers to be charged and the amounts thereof to 41.4 parts by weight of ethyl acrylate, 45.4 parts by weight of n-butyl acrylate, 11.8 parts by weight of n-butyl methacrylate, and 1.4 parts by weight of glycidyl methacrylate.

### <Mooney Viscosity (ML ₁₊₄ at 100°C)>

For each of the acrylic copolymers A to K, a Mooney viscosity (ML ₁₊₄) was measured at a measurement temperature of 100°C using Mooney Viscometer AM-3 manufactured by Toyo Seiki Seisaku-sho, Ltd. in accordance with a Mooney viscosity test of uncross-linked rubber physical testing methods specified in JIS K 6300. The results are shown in Table 1.

### (Production of Acrylic Copolymer-Containing Composition)

Using a kneader, 100 parts by weight of each of the acrylic copolymers A to K, 60 parts by weight of carbon black (classification according to ASTM D1765: N550), 2 parts by weight of stearic acid (dispersant and softener for carbon black), and 2 parts by weight of 4,4'-bis(α,α-dimethylbenzyl)diphenylamine (antiaging agent) were kneaded at 120°C. Then, 0.6 parts by weight of hexamethylenediamine carbamate (aliphatic diamine cross-linking agent) and 2 parts by weight of di-o-tolylguanidine (cross-linking accelerator) were added thereto and kneaded by a kneading roll at room temperature to prepare acrylic copolymer-containing compositions.

### (Preparation of Uncross-linked Sheet)

Each of the acrylic copolymer-containing compositions obtained above was kneaded by a kneader and an open roll to produce uncross-linked sheets having a thickness of 2 to 2.5 mm.

### (Mooney Scorch Test)

The obtained uncross-linked sheet was subjected to the Mooney scorch test specified in JIS K 6300 using Mooney Viscometer AM-3 manufactured by Toyo Seiki Seisaku-sho, Ltd. to measure a Mooney scorch time at 125°C.

### (Preparation of Cross-Linked Product)

The uncross-linked rubber sheet obtained above was pressed at 180°C for 10 minutes and further heated in an air oven at 180°C for 3 hours to obtain a cross-linked product.

### (Cold Resistance Test)

In accordance with JIS K 6261, evaluation was conducted by Gehman test using TM-2533 manufactured by Ueshima Seisakusho Co., Ltd., that is, a temperature (T10) at which the modulus became 10 times the modulus at room temperature (25°C) was measured. The lower the temperature of T10, the better the cold resistance can be judged to be.

### (Test of Normal State Physical Properties)

Using the obtained cross-linked product, evaluations of a tensile test and a hardness test were conducted using TG-2kN manufactured by Minebea Co., Ltd. The tensile test was conducted using a No. 3 dumbbell-shaped test piece in accordance with the method specified in JIS K 6251, and the hardness test was conducted in accordance with the method specified in JIS K 6253.

### (Heat-Aging Resistance Test)

Heat aging was performed by heating the above cross-linked product under the conditions of 190°C for 336 hours. After heat aging, evaluations of a tensile test and a hardness test were conducted in the same manner as the test of normal state physical properties.

Table 1 shows the test results of Examples and Comparative Examples obtained by the above test methods.

In the table, "t₅" refers to a Mooney scorch time specified in the Mooney scorch test of JIS K 6300, "EB" refers to an elongation at break specified in the tensile test of JIS K 6251, and "Hs" refers to a type A durometer hardness specified in the hardness test of JIS K 6253. "ΔEB" refer to a change rate of EB with respect to the normal state physical property which is the physical property before heat-aging resistance test (ΔEB (%) = {(EB (%) after heat-aging resistance test - EB (%) before heat-aging resistance test) / EB (%) before heat-aging resistance test} × 100 (%)). "ΔHs" refer to a difference of Hs with respect to the normal state physical property (ΔHs = Hs after heat-aging resistance test - Hs before heat-aging resistance test).

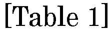

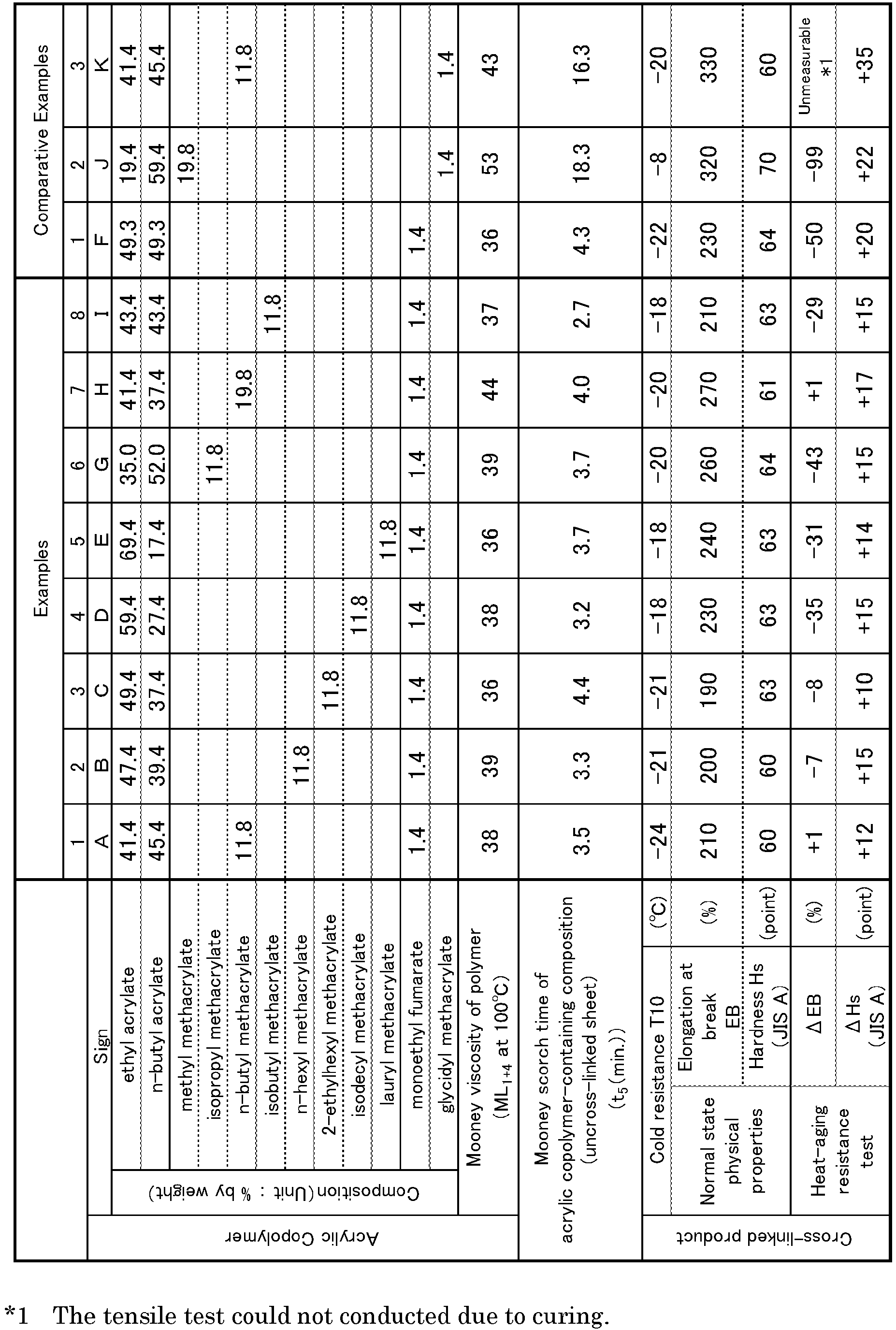

As shown in Table 1, in the heat-aging resistance test, Examples 1 to 8, which were cross-linked products obtained by cross-linking the copolymer of the present invention, had lower change rates of elongation (ΔEB) after heat aging and smaller changes of hardness (ΔHs) after heat aging than those of Comparative Examples. In particular, when n-butyl methacrylate was used as a copolymerization component, the change rate of elongation (ΔEB) further lowered, and the heat resistance was improved while maintaining the cold resistance. From these results, it can be seen that the cross-linked products obtained by cross-linking the acrylic copolymer of the present invention have a low change rate of elongation and a small change in hardness, and are excellent in heat resistance, even when exposed to high temperatures for a long period of time.

### INDUSTRIAL APPLICABILITY

The acrylic copolymer of the present invention, utilizing its excellent heat resistance, weather resistance, ozone resistance, and abrasion resistance, can be widely used as materials for rubber products and resin products or as raw materials for adhesives and paints. In particular, the cross-linked product produced using the acrylic copolymer of the present invention is extremely suitable for an automotive application such as fuel hoses, air hoses, and tube materials.

## Claims

1. An acrylic copolymer comprising:
45 to 89.5% by weight of structural units (A) which are structural units derived from an acrylic acid ester having an alkyl group having 1 to 8 carbon atoms and/or structural units derived from an acrylic acid ester having an alkoxyalkyl group having 2 to 8 carbon atoms;
10 to 50% by weight of structural units (B) derived from an alkyl methacrylate having an alkyl group having 3 to 16 carbon atoms; and
0.5 to 5% by weight of structural units (C) derived from an ethylenically unsaturated dicarboxylic acid monoester,
wherein the total content of the structural units (A), the structural units (B), and the structural units (C) is 100% by weight in the acrylic copolymer.

2. The acrylic copolymer according to claim 1, wherein the structural units (A) are structural units derived from an acrylic acid ester having an alkyl group having 1 to 8 carbon atoms.

3. The acrylic copolymer according to claim 1 or 2, wherein the structural units (A) comprise both structural units (A1) derived from an acrylic acid ester having an alkyl group having 1 to 3 carbon atoms and structural units (A2) derived from an acrylic acid ester having an alkyl group having 4 to 8 carbon atoms.

4. The acrylic copolymer according to claim 3, wherein a weight ratio (A1):(A2) of the structural units (A1) and the structural units (A2) is 10:90 to 90:10.

5. The acrylic copolymer according to claim 3, wherein a weight ratio (A1):(A2) of the structural units (A1) and the structural units (A2) is 30:70 to 70:30.

6. The acrylic copolymer according to any of claims 1 to 5, wherein the alkyl group of the structural units (B) has 4 to 9 carbon atoms.

7. The acrylic copolymer according to any of claims 1 to 6 having a Mooney viscosity (ML ₁₊₄) in accordance with JIS K 6300 of 10 to 100 at 100°C.

8. An acrylic copolymer-containing composition comprising the acrylic copolymer according to any of claims 1 to 7 and a cross-linking agent.

9. The acrylic copolymer-containing composition according to claim 8, wherein when formed into an uncross-linked sheet having a thickness of about 2 to 2.5 mm, the acrylic copolymer-containing composition has a Mooney scorch time (t₅) in accordance with JIS K 6300 of 1 to 10 minutes at 125°C.

10. A cross-linked product produced using the acrylic copolymer-containing composition according to claim 8 or 9.

11. The cross-linked product according to claim 10 exhibiting at least one of the following characteristics:
(i) elongation at break (EB) in accordance with JIS K 6251 of 100 to 400%; and
(ii) type A durometer hardness (Hs) in accordance with JIS K 6253 of 30 to 100.

12. The cross-linked product according to claim 10 or 11 exhibiting a change rate (%) of elongation at break (EB), which is calculated based on the following formula:
the change rate (%) = {(EB (%) after heat-aging resistance test - EB (%) before heat-aging resistance test) / EB (%) before heat-aging resistance test} × 100 (%)),
wherein EB (%) is determined in accordance with JIS K 6251, and
the heat-aging resistance test is a test heating the cross-linked product at 190°C for 336 hours.

13. The cross-linked product according to any of claims 10 to 12, wherein a type A durometer hardness (Hs) in accordance with JIS K 6253 of the cross-linked product before heating at 190°C for 336 hours shows a change within ±20 with respect to a type A durometer hardness (Hs) in accordance with JIS K 6253 of the cross-linked product after the heating.

## Patentansprüche

1. Acrylcopolymer, umfassend:
45 bis 89,5 Gew.-% Struktureinheiten (A), die Struktureinheiten abgeleitet von einem Acrylsäureester mit einer Alkylgruppe mit 1 bis 8 Kohlenstoffatomen und/oder Struktureinheiten abgeleitet von einem Acrylsäureester mit einer Alkoxyalkylgruppe mit 2 bis 8 Kohlenstoffatomen sind;
10 bis 50 Gew.-% Struktureinheiten (B), abgeleitet von einem Alkylmethacrylat mit einer Alkylgruppe mit 3 bis 16 Kohlenstoffatomen; und
0,5 bis 5 Gew.-% Struktureinheiten (C), abgeleitet von einem ethylenisch ungesättigten Dicarbonsäuremonoester,
wobei der Gesamtgehalt der Struktureinheiten (A), der Struktureinheiten (B) und der Struktureinheiten (C) 100 Gew.-% in dem Acrylcopolymer beträgt.

2. Acrylcopolymer nach Anspruch 1, wobei die Struktureinheiten (A) Struktureinheiten sind, die von einem Acrylsäureester mit einer Alkylgruppe mit 1 bis 8 Kohlenstoffatomen abgeleitet sind.

3. Acrylcopolymer nach Anspruch 1 oder 2, wobei die Struktureinheiten (A) sowohl Struktureinheiten (A1), die von einem Acrylsäureester mit einer Alkylgruppe mit 1 bis 3 Kohlenstoffatomen abgeleitet sind, als auch Struktureinheiten (A2), die von einem Acrylsäureester mit einer Alkylgruppe mit 4 bis 8 Kohlenstoffatomen abgeleitet sind, umfassen.

4. Acrylcopolymer nach Anspruch 3, wobei das Gewichtsverhältnis (A1):(A2) der Struktureinheiten (A1) und der Struktureinheiten (A2) 10:90 bis 90:10 beträgt.

5. Acrylcopolymer nach Anspruch 3, wobei das Gewichtsverhältnis (A1):(A2) der Struktureinheiten (A1) und der Struktureinheiten (A2) 30:70 bis 70:30 beträgt.

6. Acrylcopolymer nach einem der Ansprüche 1 bis 5, wobei die Alkylgruppe der Struktureinheiten (B) 4 bis 9 Kohlenstoffatome aufweist.

7. Acrylcopolymer nach einem der Ansprüche 1 bis 6 mit einer Mooney-Viskosität (ML ₁₊₄) gemäß JIS K 6300 von 10 bis 100 bei 100°C.

8. Acrylcopolymer-enthaltende Zusammensetzung, umfassend das Acrylcopolymer nach einem der Ansprüche 1 bis 7 und ein Vernetzungsmittel.

9. Acrylcopolymer-enthaltende Zusammensetzung nach Anspruch 8, wobei die Acrylcopolymer-enthaltende Zusammensetzung, wenn sie zu einem unvernetzten Blatt mit einer Dicke von etwa 2 bis 2,5 mm geformt ist, eine Mooney-Anvulkanisationszeit (t₅) gemäß JIS K 6300 von 1 bis 10 Minuten bei 125°C aufweist.

10. Vernetztes Produkt, hergestellt unter Verwendung der Acrylcopolymerenthaltenden Zusammensetzung nach Anspruch 8 oder 9.

11. Vernetztes Produkt nach Anspruch 10, das mindestens eine der nachstehenden Eigenschaften aufweist:
(i) Bruchdehnung (EB) gemäß JIS K 6251 von 100 bis 400%; und
(ii) Durometerhärte (Hs) vom Typ A nach JIS K 6253 von 30 bis 100.

12. Vernetztes Produkt nach Anspruch 10 oder 11, das eine Änderungsrate (%) der Bruchdehnung (EB) aufweist, die nach der nachstehenden Formel berechnet wird:
Änderungsrate (%) = {(EB (%) nach dem Wärmealterungsbeständigkeitstest - EB (%) vor dem Wärmealterungsbeständigkeitstest) / EB (%) vor dem Wärmealterungsbeständigkeitstest} × 100 (%)),
wobei EB (%) in Übereinstimmung mit JIS K 6251 bestimmt wird, und
der Wärmealterungsbeständigkeitstest ein Test ist, bei dem das vernetzte Produkt 336 Stunden lang bei 190°C erhitzt wird.

13. Vernetztes Produkt nach einem der Ansprüche 10 bis 12, wobei eine Typ-A-Durometerhärte (Hs) gemäß JIS K 6253 des vernetzten Produkts vor dem Erhitzen auf 190°C für 336 Stunden eine Änderung innerhalb von ±20 in Bezug auf eine Typ-A-Durometerhärte (Hs) gemäß JIS K 6253 des vernetzten Produkts nach dem Erhitzen zeigt.

## Revendications

1. Copolymère acrylique comprenant :
45 à 89,5 % en poids d'unités structurelles (A) qui sont des unités structurelles dérivées d'un ester d'acide acrylique ayant un groupe alkyle ayant 1 à 8 atomes de carbone et/ou des unités structurelles dérivées d'un ester d'acide acrylique ayant un groupe alcoxyalkyle ayant 2 à 8 atomes de carbone ;
10 à 50 % en poids d'unités structurelles (B) dérivées d'un méthacrylate d'alkyle ayant un groupe alkyle ayant 3 à 16 atomes de carbone ; et
0,5 à 5 % en poids d'unités structurelles (C) dérivées d'un monoester d'acide dicarboxylique à insaturation éthylénique,
dans lequel la teneur totale en les unités structurelles (A), les unités structurelles (B) et les unités structurelles (C) est de 100 % en poids dans le copolymère acrylique.

2. Copolymère acrylique selon la revendication 1, dans lequel les unités structurelles (A) sont des unités structurelles dérivées d'un ester d'acide acrylique ayant un groupe alkyle ayant 1 à 8 atomes de carbone.

3. Copolymère acrylique selon la revendication 1 ou 2, dans lequel les unités structurelles (A) comprennent à la fois des unités structurelles (A1) dérivées d'un ester d'acide acrylique ayant un groupe alkyle ayant 1 à 3 atomes de carbone et des unités structurelles (A2) dérivées d'un ester d'acide acrylique ayant un groupe alkyle ayant 4 à 8 atomes de carbone.

4. Copolymère acrylique selon la revendication 3, dans lequel un rapport pondéral (A1)/(A2) des unités structurelles (A1) et des unités structurelles (A2) est de 10/90 à 90/10.

5. Copolymère acrylique selon la revendication 3, dans lequel un rapport pondéral (A1)/(A2) des unités structurelles (A1) et des unités structurelles (A2) est de 30/70 à 70/30.

6. Copolymère acrylique selon l'une quelconque des revendications 1 à 5, dans lequel le groupe alkyle des unités structurelles (B) a 4 à 9 atomes de carbone.

7. Copolymère acrylique selon l'une quelconque des revendications 1 à 6 ayant une viscosité Mooney (ML ₁₊₄) conformément à JIS K 6300 de 10 à 100 à 100°C.

8. Composition contenant un copolymère acrylique comprenant le copolymère acrylique selon l'une quelconque des revendications 1 à 7 et un agent de réticulation.

9. Composition contenant un copolymère acrylique selon la revendication 8, dans laquelle lors de la formation en une feuille non réticulée ayant une épaisseur d'environ 2 à 2,5 mm, la composition contenant un copolymère acrylique a une durée de précocité Mooney (t₅) conformément à JIS K 6300 de 1 à 10 minutes à 125 °C.

10. Produit réticulé produit en utilisant la composition contenant un copolymère acrylique selon la revendication 8 ou 9.

11. Produit réticulé selon la revendication 10 présentant au moins une des caractéristiques suivantes :
(i) un allongement à la rupture (EB) conformément à JIS K 6251 de 100 à 400 % ; et
(ii) une dureté d'après duromètre de type A (Hs) conformément à JIS K 6253 de 30 à 100.

12. Produit réticulé selon la revendication 10 ou 11 présentant un taux de changement (%) de l'allongement à la rupture (EB), qui est calculé en fonction de la formule suivante :
le taux de changement (%) = {(EB (%) après test de résistance au vieillissement thermique - EB (%) avant test de résistance au vieillissement thermique) / EB (%) avant test de résistance au vieillissement thermique} × 100 (%)),
dans laquelle EB (%) est déterminé conformément à JIS K 6251, et
le test de résistance au vieillissement thermique est un test chauffant le produit réticulé à 190 °C pendant 336 heures.

13. Produit réticulé selon l'une quelconque des revendications 10 à 12, dans lequel une dureté d'après duromètre de type A (Hs) conformément à JIS K 6253 du produit réticulé avant chauffage à 190 °C pendant 336 heures montre un changement dans les ±20 par rapport à une dureté d'après duromètre de type A (Hs) conformément à JIS K 6253 du produit réticulé après le chauffage.
